# FASCICULE DE BREVET EUROPEEN

(11) **EP 2 856 542 B1**
(45) Date de publication et mention de la délivrance du brevet: **06.04.2016**
(21) Numéro de dépôt: 13725124.5
(22) Date de dépôt: 20.05.2013
(51) Int. Cl.: H01M 4/86, H01M 12/06, H01M 12/08, H01M 10/0565, H01M 10/052, H01M 4/90, H01M 4/92

(54) **CATHODE POUR BATTERIE LITHIUM-AIR, COMPORTANT UNE STRUCTURE BI-COUCHES DE CATALYSEURS DIFFERENTS ET BATTERIE LITHIUM-AIR COMPRENANT CETTE CATHODE**
KATHODE FÜR EINE LITHIUM/LUFTBATTERIE, MIT EINER ZWEISCHICHTENSTRUKTUR VERSCHIEDENER KATALYSATOREN UND LITHIUM/LUFTBATTERIE MIT DIESER KATHODE
CATHODE FOR A LITHIUM/AIR BATTERY, COMPRISING A BILAYER STRUCTURE OF DIFFERENT CATALYSTS AND LITHIUM/AIR BATTERY COMPRISING THIS CATHODE

(30) Priorité: 25.05.2012 FR 1254834
(43) Date de publication de la demande: 08.04.2015
(73) Titulaire: Commissariat à l'Énergie Atomique et aux Énergies Alternatives, 75015 Paris (FR)
(72) Inventeur: ROZAIN, Caroline, F-38100 Grenoble (FR); GUILLET, Nicolas, F-26300 Pizancon (FR)
(74) Mandataire: Esselin, Sophie
(86) Numéro de dépôt international: PCT/EP2013/060323
(87) Numéro de publication internationale: WO 2013/174770

(56) Documents cités:
- JP-A- 2006 286 414
- JP-A- 2011 198 662
- US-A1- 2010 086 849
- US-A1- 2011 223 494
- US-A1- 2012 107 728

## Description

Le domaine de l'invention est celui des batteries qui sont des dispositifs permettant de convertir directement une énergie stockée sous forme chimique vers une énergie électrique.

Dans le cas des batteries lithium-air, l'énergie électrique est produite par oxydation du lithium et réduction de l'oxygène. Considérant la densité énergétique très élevée du couple lithium-dioxygène, cette technologie peut potentiellement atteindre des densités d'énergie utilisables de l'ordre de 1700 Wh/kg, soit près de 10 fois plus que les batteries lithium-ion [G. Girishkumar, B. McCloskey, A. C. Luntz, S. Swanson, and W. Wilcke « Lithium - Air Battery: Promise and Challenges » J. Phys. Chem. Lett. 2010, 1, 2193-2203 ; DOI : 10.1021 /jz1005384].

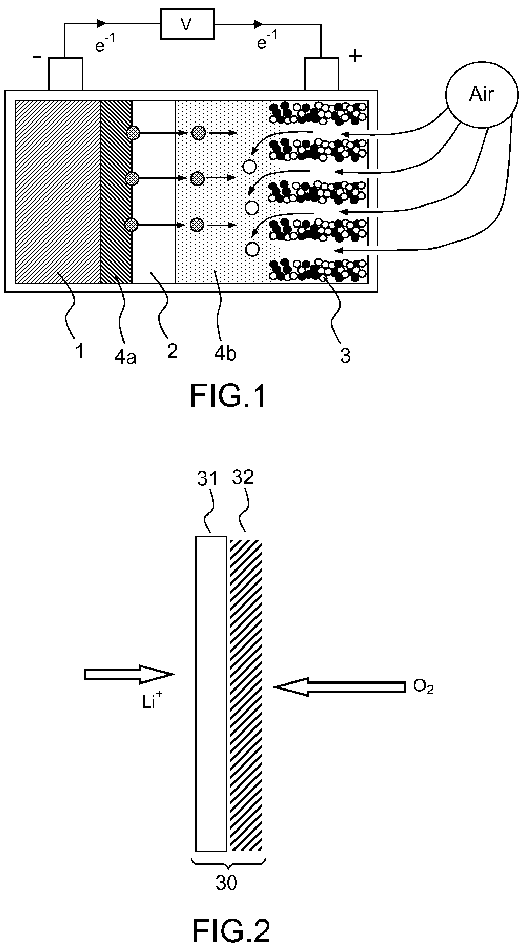

Ce type de batterie est composé d'une électrode négative de lithium métal et d'un compartiment alimenté par de l'oxygène, séparés par un matériau conducteur des ions lithium. Lorsque la batterie produit un courant électrique (décharge), l'électrode négative est le siège d'une réaction d'oxydation du lithium. Les ions lithium ainsi produits vont traverser l'électrolyte et se recombiner avec les produits de la réduction de l'oxygène à l'électrode positive. Lors de la recharge, les produits de réactions accumulés sur l'électrode positive au moment de la décharge vont reformer des ions lithium et dégager de l'oxygène. La figure 1 illustre un tel système, mettant en évidence : une anode en lithium 1 capable de libérer des ions lithium, un électrolyte organique 4a séparé d'un électrolyte aqueux 4b par une membrane 2 conductrice des ions lithium et une cathode catalytique à air 3.

Lorsque la batterie produit un courant électrique (décharge), l'électrode négative est le siège d'une réaction d'oxydation du lithium. Les ions lithium ainsi produits vont traverser l'électrolyte et se recombiner avec les produits de la réduction de l'oxygène à l'électrode positive. Lors de la recharge, les produits de réactions accumulés sur l'électrode positive au moment de la décharge vont reformer des ions lithium et dégager de l'oxygène.

Dans une batterie lithium-air, l'électrode positive doit répondre à plusieurs critères et fournir :
- un large chemin de diffusion de l'oxygène jusqu'à l'interface de réaction ;
- une bonne conductivité des ions lithium ;
- une excellente conductivité électrique ;
- une bonne stabilité dans le temps.

En effet, les réactions de charge et de décharge de la batterie ne peuvent se produire que lorsque l'électrolyte, les électrons et les molécules de gaz coexistent à la même interface. De plus, lors du fonctionnement de la batterie lithium-air, l'électrode positive est le siège des réactions de charge et de décharge de la batterie. Un catalyseur favorisant ces deux réactions doit être utilisé.

Les électrodes positives présentées dans la littérature sont pour la plupart composées d'un mélange de carbone, d'un liant comme le PTFE (polytetrafluorethylene (Téflon®)) ou le PVDF (polyfluorure de vinylidène), et d'un catalyseur comme l'oxyde de cobalt ou de manganèse. L'utilisation d'un seul catalyseur réparti dans le volume de l'électrode comme décrit dans le brevet US 2011/0104576 A1 ne permet d'améliorer qu'une seule des réactions (charge ou décharge) et limite ainsi fortement les performances de la batterie.

De plus, du fait de la composition des électrodes positives (support carboné), les batteries lithium-air utilisant un électrolyte aqueux présentent un nombre de cycle de charge et de décharge très limités en raison de la corrosion du support catalytique en carbone par l'eau. En effet, en milieu acide, le carbone se corrode selon la réaction suivante :

*C* + 2*H*₂*O* ⇄ *CO*₂+ 4*H*⁺ 4*e*⁻ (1)

Le potentiel d'oxydoréduction de cette réaction est d'environ 0,2 V vs. ESH.

En milieu basique, trois régimes différents de corrosion peuvent être distingués en fonction du potentiel appliqué [P.N. Ross, H. Sokol, J. of Electrochemical society, 131 (1984), 8, 1742-1749] :
- entre 530 et 580 mV vs. ESH, le procédé prédominant est la réaction de dissolution du carbone en ion carbonate ;
- entre 580 et 680 mV vs. ESH, le dégagement d'oxygène et la dissolution du carbone se produisent à des vitesses équivalentes ;
- tandis que pour des potentiels supérieurs à 680 mV vs. ESH, le dégagement d'oxygène et la production de monoxyde de carbone deviennent les réactions dominantes.

Comme le potentiel de charge de la batterie est très élevé (E_{charge}>0,85 V vs. ESH [4] : [A. D'ebart et al. / Journal of Power Sources 174 (2007) 1177-1182]), ces réactions de corrosion autant en milieu acide qu'en milieu basique ont toujours lieu.

Plusieurs solutions ont été proposées dans l'état de l'art pour réduire ou supprimer la corrosion du carbone à la cathode comme l'utilisation de deux électrodes différentes pour la charge et la décharge : *[*Development of a New-type Lithium-Air Battery with Large Capacity, AIST press release of February 24, 2009, http://www.aist.go.jp/aist e/latest research/2009/20090727/20090727.html ; P. Stevens, Projet LIO, Faisabilité d'une batterie lithium air, Séminaire mi-parcours édition Stock-e 2007, December 2009] ou encore la modification de la nature du carbone support (utilisation de supports de carbone plus résistants à la corrosion, tels que les nanotubes de carbone [brevet US 2011/0104576 A1]). Même si ces supports sont réputés comme étant moins sensible à la corrosion, ils le sont quand même et se dégradent seulement un peu moins rapidement que leurs équivalents à base de noir de carbone.

Les documents JP 2006 286414 A, US 2010/086849 A1, US 2012/107728 A1, US 2011/223494 A1 et JP 2011 198662 A constituent des références de l'art antérieur.

Ainsi pour résoudre le problème mentionné de manière générale dans la littérature qui s'accorde à dire que la plupart des limitations dans la capacité de charge et de décharge de la batterie lithium-air provient en partie d'une insuffisance d'élaboration de l'électrode à air, nuisant à la commercialisation de batteries lithium-air, la présente invention a pour objet une cathode améliorée pour batterie lithium-air, composée de deux couches à base d'au moins deux types de catalyseurs supportés différents.

Une première couche en contact avec l'électrolyte contient un premier type de catalyseur supporté sur des particules conductrices électroniques favorisant la réaction d'oxydation des produits issus de la décharge de la pile (LiO₂, Li₂O₂).

Une seconde couche en contact avec la source de gaz contient un second type de catalyseur supporté sur des particules conductrices électroniques favorisant la réaction de réduction de l'oxygène (décharge de la batterie).

Plus précisément la présente invention a pour objet une cathode catalytique destinée à une batterie lithium-air comprenant des particules catalytiques supportées sur des particules conductrices électroniques, ladite cathode comprenant une première face destinée à être en contact avec un matériau conducteur ionique et une seconde face destinée à être en contact avec de l'oxygène de l'air caractérisée en ce que ladite cathode comportant au moins
- une première couche catalytique destinée à être en contact avec le matériau conducteur ionique et
- une seconde couche catalytique destinée à être en contact avec l'oxygène de l'air ;
- ladite première couche comprend des premières espèces de particules catalytiques favorisant la réaction d'oxydation de produits à base de lithium, lesdites espèces étant à base de cobalt ou de nickel ;
- ladite seconde couche comprend des secondes espèces de particules catalytiques favorisant la réaction de réduction de l'oxygène, lesdites secondes espèces étant à base de manganèse ou d'argent ou de platine.

Selon une variante de l'invention, lesdites première et seconde couches comprennent un liant conducteur des ions lithium.

Selon une variante de l'invention, les premières couches comprennent un liant polymère pouvant être du polytetrafluorethylene ou du polyfluorure de vinylidène.

Un plus fort taux de liant conducteur des ions lithium peut avantageusement être utilisé dans la couche active catalysant la réaction de charge de la batterie (couche plus hydrophile) et un plus faible taux dans celle catalysant la réaction de décharge de la batterie (couche plus hydrophobe). C'est pourquoi, selon une variante de l'invention, la concentration massique en liant dans la première couche catalytique est supérieure à la concentration massique en liant dans la seconde couche catalytique.

Selon une variante de l'invention, la concentration massique en liant dans ladite première couche est comprise entre environ 20 % et 40%.

Selon une variante de l'invention, la concentration massique en liant dans ladite seconde couche est comprise entre environ 10% et 30%.

Selon une variante de l'invention, au moins la première espèce catalytique ou la seconde espèce catalytique comprend un oxyde métallique.

Selon une variante de l'invention, les particules conductrices électroniques sont des particules de carbure métallique ou nitrure métallique à base de métal réfractaire pouvant être du titane ou du tantale ou du tungstène.

Selon une variante de l'invention, les deux couches sont supportées par un collecteur de courant pouvant être en nickel ou en titane.

L'invention a aussi pour objet une batterie lithium-air comprenant une anode à base de lithium, un électrolyte conducteur d'ions lithium et une cathode catalytique à air, la cathode catalytique étant selon la présente invention.

Avantageusement, la batterie lithium-air de l'invention comporte un matériau électrolyte solide à base de polymère organique conducteur d'ions Li⁺.

En effet, de manière générale, l'électrolyte en contact avec l'électrode à air étant liquide (aqueux ou organique), induit des problèmes de mouillabilité de l'électrode cathodique (R. Padbury, X. Zhang, J. of Power Sources 196 (2011), 4436-4444) et nécessite l'utilisation d'un compartiment rempli d'électrolyte liquide complexifiant la batterie et en alourdissant le poids.

L'assemblage ainsi formé et constitué de l'électrolyte solide et de la cathode catalytique permet d'allier une parfaite mouillabilité de l'électrode et donc l'établissement de nombreuses zones de points triples du fait de la présence du ionomère conducteur des ions lithium tout en offrant une surface spécifique bien supérieure que les électrodes déposées sur grille de nickel de l'art antérieur.

Selon une variante de l'invention, le polymère organique est un polymère organique sulfoné par exemple un polymère perfluorosulfoné (PFSA) ou un polyétheréthercétone sulfoné (s-PEEK) ou un polyimide (s-PI) sulfone ou un polyfluorure de vinylidène (PVDF).

Selon une variante de l'invention, le polymère organique est un polymère lithié.

L'invention sera mieux comprise et d'autres avantages apparaîtront à la lecture de la description qui va suivre donnée à titre non limitatif et grâce aux figures annexées parmi lesquelles :
- la figure 1 schématise une pile à combustible lithium-air de l'art connu ;
- la figure 2 illustre une structure de cathode catalytique à air selon l'invention composée d'une couche catalytique hydrophile catalysant la réaction de charge de la batterie et d'une couche catalytique plus hydrophobe favorisant la réduction de l'oxygène ;
- la figure 3 illustre l'amélioration des performances électrochimiques lors de l'utilisation d'une cathode à air comportant deux couches selon l'invention (une couche de cobalt supporté sur carbure de titane contenant 30% de ionomère conducteur des ions lithium / une couche de manganèse supporté sur carbure de titane contenant 20% de ionomère conducteur des ions lithium) par rapport à une électrode à air monocouche ;
- la figure 4 illustre l'évolution des performances d'une cathode à air de l'invention, sur 200 cycles de charge/décharge à ±1 mA cm⁻2.

De manière générale, la cathode catalytique de l'invention comporte un assemblage de deux couches comprenant chacune une espèce catalytique assurant une fonction différente. Ainsi comme représenté en figure 2, la cathode 30 utilisée dans une batterie lithium-air, comprend une première couche 31 destinée à être en contact avec l'électrolyte conducteur des ions lithium et une seconde couche 32 destinée à être en contact avec l'arrivée d'air chargée en O₂.

Les catalyseurs sont supportés généralement sur des particules de carbone. Dans le but d'améliorer la résistance des électrodes à air (corrosion des supports carbonés aux potentiels de fonctionnement de la batterie), il peut être avantageux de remplacer le carbone par des carbures ou nitrures métalliques, matériaux plus stables sur les gammes de potentiels utilisés, tels que le carbure de titane, carbure de tantale ou le carbure de tungstène, et le nitrure de titane. Pour être utile en tant que support de catalyseur, le matériau doit être un bon conducteur électronique et présenter une large surface spécifique.

Le carbure de titane avec une conductivité électrique proche des métaux et une surface spécifique de l'ordre de 25 m² g⁻¹ constitue un support de catalyseur très bien adapté.

Les réactions électrochimiques interfaciales de charge et de décharge de la batterie lithium-air se produisent uniquement quand l'électrolyte, les électrons et les molécules de gaz coexistent à une même interface aussi appelée point triple. Ainsi, une électrode à air efficace doit permettre au catalyseur d'être facilement accessible aux ions Li⁺ présents dans l'électrolyte, tout en laissant un large chemin de diffusion au dioxygène.

Plus précisément et selon un exemple de la présente invention, la cathode est constituée de deux couches :
- la première couche en contact avec l'électrolyte contient un catalyseur favorisant la réaction d'oxydation des produits issus de la décharge de la pile (LiO₂, Li₂O₂) pouvant être un oxyde de cobalt ;
- la deuxième couche en contact avec la source de gaz contient un catalyseur favorisant la réaction de réduction de l'oxygène (décharge de la batterie) pouvant être un oxyde de manganèse.

Les particules catalytiques peuvent être supportées par des particules de carbure TiC.

Pour obtenir les deux types de couches constitutives de la cathode, on utilise un liant et un solvant. On réalise des suspensions pouvant être déposées sur un support conducteur électronique (grille métallique de nickel, titane, acier...) par une technique d'impression (enduction, pulvérisation, sérigraphie...).

Le liant utilisé au sein de l'électrode doit être un matériau conducteur des ions lithium. Des gradients de concentration dans les deux couches actives de ce liant conducteur des ions lithium permettent de favoriser soit l'humidification de la couche soit l'accès au gaz. Ainsi, un fort taux de liant conducteur des ions lithium peut avantageusement être utilisé dans la couche active catalysant la réaction de charge de la batterie (couche plus hydrophile) et un plus faible taux dans celle catalysant la réaction de décharge de la batterie (couche plus hydrophobe).

### Exemples de réalisation d'une cathode selon l'invention

Les poudres de catalyseurs supportés sur carbure de titane sont préparées par réduction chimique d'un sel métallique du catalyseur par le borohydrure de sodium. Ces poudres sont ensuite dispersées en encres dont les compositions sont données ci-dessous :
Couche hydrophile :
   - 50 mg de poudre de cobalt supporté sur TiC
   - 30% en masse de liant conducteur des ions lithium
   - 0,2 g d'eau désionisée
   - 0,2 g d'isopropanol.
Couche plus hydrophobe :
   - 50 mg de poudre de manganèse supporté sur TiC
   - 20% en masse de liant conducteur des ions lithium
   - 0,2 g d'eau désionisée
   - 0,2 g d'isopropanol.

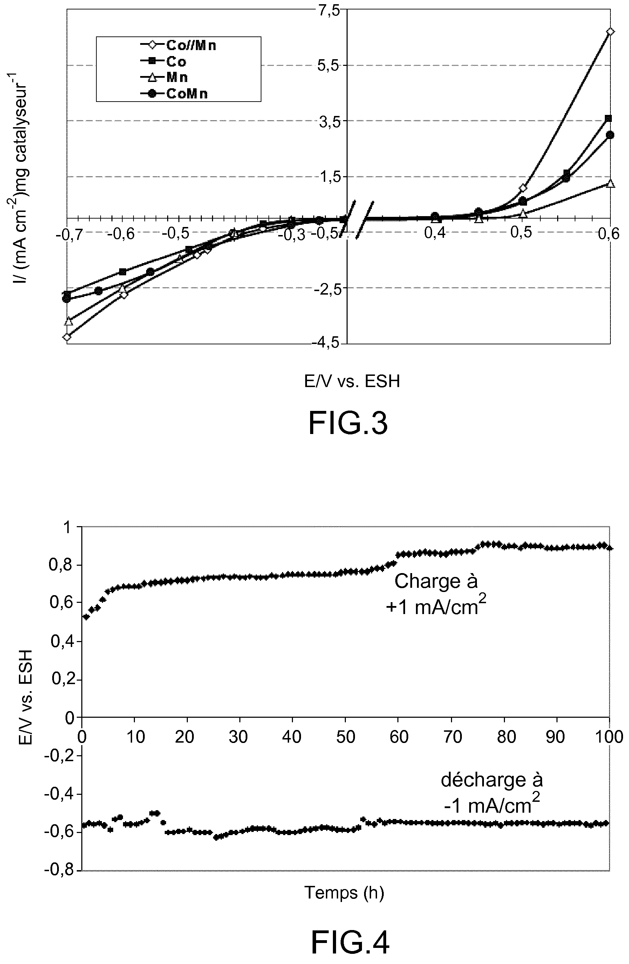

La figure 3 illustre l'amélioration des performances électrochimiques lors de l'utilisation d'une électrode à air en deux couches (une couche de cobalt supporté sur carbure de titane contenant 30% de ionomère conducteur des ions lithium / une couche de manganèse supporté sur carbure de titane contenant 20% d'ionomère conducteur des ions lithium) par rapport à une électrode à air monocouche. Milieu LiOH 1 M., balayage à 5 mV s⁻¹.

Le demandeur a suivi l'évolution des performances au cours du temps de cette cathode (avec une couche catalytique à base de cobalt et une couche catalytique à base de manganèse, supporté sur carbure de titane, membrane Nation®, et collecteur de courant en titane) sous oxygène en milieu LiOH 1 M.

La cathode a été soumise à 200 cycles de charge/décharge d'une durée de 30 mn à ±1 mA/cm². Ces tests ont été menés sur plus de 100 heures et n'ont pas présenté de modifications particulières des potentiels de charge et de décharge comme illustré en figure 4 qui montre les performances de la cathode à air sur 200 cycles de charge/décharge à ±1 mA cm⁻².

La différence de potentiel entre la charge et la décharge est d'environ 1,1 V sur toute la durée des cycles. Ces résultats présentent une amélioration significative par rapport à l'utilisation d'une deuxième électrode pour le dégagement d'oxygène, permettant également d'éviter la corrosion du carbone.

## Revendications

1. Cathode catalytique destinée à une batterie lithium-air comprenant des particules catalytiques supportées sur des particules conductrices électroniques, ladite cathode comprenant une première face destinée à être en contact avec un matériau conducteur ionique et une seconde face destinée à être en contact avec de l'oxygène de l'air **caractérisée en ce que** ladite cathode comportant au moins
- une première couche catalytique destinée à être en contact avec le matériau conducteur ionique et
- une seconde couche catalytique destinée à être en contact avec l'oxygène de l'air ;
- ladite première couche comprend des premières espèces de particules catalytiques favorisant la réaction d'oxydation de produits à base de lithium, lesdites espèces étant à base de cobalt ou de nickel ;
- ladite seconde couche catalytique comprend des secondes espèces de particules catalytiques favorisant la réaction de réduction de l'oxygène, lesdites secondes espèces étant à base de manganèse ou d'argent ou de platine.

2. Cathode catalytique selon la revendication 1, **caractérisée en ce que** lesdites première et seconde couches comprennent un liant conducteur des ions Li⁺.

3. Cathode catalytique selon la revendication 2, **caractérisée en ce que** la concentration massique en liant dans la première couche catalytique est supérieure à la concentration massique en liant dans la seconde couche catalytique.

4. Cathode catalytique selon l'une des revendications 2 à 3, **caractérisée en ce que** la concentration massique en liant dans ladite première couche est comprise entre environ 20 % et 40%.

5. Cathode catalytique selon l'une des revendications 2 à 4, **caractérisée en ce que** la concentration massique en liant dans ladite seconde couche est comprise entre environ 10% et 30%.

6. Cathode catalytique selon l'une des revendications 2 à 5, **caractérisé en ce que** le liant est un liant polymère pouvant être du polytetrafluorethylene ou du polyfluorure de vinylidène.

7. Cathode catalytique selon l'une des revendications 1 à 6, **caractérisée en ce que** les particules support, conductrices électroniques, sont des particules de carbure métallique à base de métal réfractaire pouvant être du titane ou du tantale ou du tungstène.

8. Cathode catalytique selon l'une des revendications 1 à 7, **caractérisée en ce que** les deux couches sont supportées par un collecteur de courant pouvant être en titane.

9. Batterie lithium/air comprenant une anode à base de lithium, un électrolyte conducteur d'ions lithium et une cathode catalytique à air, la cathode catalytique étant selon l'une des revendications 1 à 8.

10. Batterie lithium/air selon la revendication 9, **caractérisée en ce que** l'électrolyte conducteur d'ions lithium comprend un matériau électrolyte solide à base de polymère organique conduisant les ions lithium, en contact avec ladite cathode catalytique.

11. Batterie lithium/air selon la revendication 10, **caractérisé en ce que** le polymère organique est un polymère organique sulfoné par exemple un polymère perfluorosulfoné (PFSA) ou un polyétheréthercétone sulfoné (s-PEEK)ou un polyimide (s-PI) sulfone ou un polyfluorure de vinylidène (PVDF).

12. Batterie lithium/air selon la revendication 11, **caractérisé en ce que** le polymère organique est un polymère lithié.

## Patentansprüche

1. Katalytische Kathode, die für eine Lithium-Luft-Batterie bestimmt ist, die katalytische Partikel umfasst, die auf elektronisch leitenden Partikeln getragen werden, wobei die Kathode eine erste Fläche für einen Kontakt mit einem ionenleitenden Material und eine zweite Fläche für einen Kontakt mit Sauerstoff der Luft aufweist, **dadurch gekennzeichnet, dass** die Kathode wenigstens Folgendes umfasst:
- eine erste katalytische Schicht für einen Kontakt mit dem ionenleitenden Material; und
- eine zweite katalytische Schicht für einen Kontakt mit dem Sauerstoff der Luft;
- wobei die erste Schicht erste Spezies von katalytischen Partikeln umfasst, die eine Oxidationsreaktion von Produkten auf Lithiumbasis fördern, wobei die Spezies auf Kobalt oder Nickel basieren;
- wobei die zweite katalytische Schicht zweite Spezies von katalytischen Partikeln umfasst, die eine Sauerstoffreduktionsreaktion fördern, wobei die zweiten Spezies auf Mangan oder Silber oder Platin basieren.

2. Katalytische Kathode nach Anspruch 1, **dadurch gekennzeichnet, dass** die erste und die zweite Schicht ein Li⁺-Ionen leitendes Bindemittel umfassen.

3. Katalytische Kathode nach Anspruch 2, **dadurch gekennzeichnet, dass** die Massenkonzentration von Bindemittel in der ersten katalytischen Schicht größer ist als die Massenkonzentration von Bindemittel in der zweiten katalytischen Schicht.

4. Katalytische Kathode nach einem der Ansprüche 2 bis 3, **dadurch gekennzeichnet, dass** die Massenkonzentration von Bindemittel in der ersten Schicht zwischen etwa 20 % und 40 % liegt.

5. Katalytische Kathode nach einem der Ansprüche 2 bis 4, **dadurch gekennzeichnet, dass** die Massenkonzentration von Bindemittel in der zweiten Schicht zwischen etwa 10 % und 30 % liegt.

6. Katalytische Kathode nach einem der Ansprüche 2 bis 5, **dadurch gekennzeichnet, dass** das Bindemittel ein polymeres Bindemittel ist, das Polytetrafluorethylen oder Polyvinylidenfluorid sein kann.

7. Katalytische Kathode nach einem der Ansprüche 1 bis 6, **dadurch gekennzeichnet, dass** die elektronisch leitenden Trägerpartikel Metallcarbidpartikel auf der Basis eines feuerfesten Metalls sind, das Titan oder Tantal oder Wolfram sein kann.

8. Katalytische Kathode nach einem der Ansprüche 1 bis 7, **dadurch gekennzeichnet, dass** die zwei Schichten von einem Stromkollektor getragen werden, der aus Titan gefertigt sein kann.

9. Lithium-Luft-Batterie, die eine Anode auf Lithiumbasis, einen Lithiumionen leitenden Elektrolyt und eine katalytische Luftkathode umfasst, wobei die katalytische Kathode eine katalytische Kathode nach einem der Ansprüche 1 bis 8 ist.

10. Lithium-Luft-Batterie nach Anspruch 9, **dadurch gekennzeichnet, dass** der Lithiumionen leitende Elektrolyt ein festes Elektrolytmaterial auf der Basis eines organischen Polymers ist, das die Lithiumionen in Kontakt mit der katalytischen Kathode leitet.

11. Lithium-Luft-Batterie nach Anspruch 10, **dadurch gekennzeichnet, dass** das organische Polymer ein sulfoniertes organisches Polymer ist, zum Beispiel ein perfluorsulfoniertes Polymer (PFSA) oder ein sulfoniertes Polyetheretherketon (s-PEEK) oder ein sulfoniertes Polyimid (s-PI) oder ein Polyvinylidenfluorid (PVDF).

12. Lithium-Luft-Batterie nach Anspruch 11, **dadurch gekennzeichnet, dass** das organische Polymer ein lithiiertes Polymer ist.

## Claims

1. A catalytic cathode intended for a lithium-air battery comprising catalytic particles supported on electronic conducting particles, said cathode comprising a first face intended to be in contact with an ion-conducting material and a second face intended to be in contact with atmospheric oxygen, **characterised in that** said cathode comprises at least:
- a first catalytic layer intended to be in contact with said ion-conducting material; and
- a second catalytic layer intended to be in contact with the atmospheric oxygen;
- said first layer comprising first species of catalytic particles promoting an oxidation reaction of lithium-based products, said species being cobalt- or nickel-based;
- said second catalytic layer comprising second species of catalytic particles promoting an oxygen reduction reaction, said second species being manganese- or silver- or platinum-based.

2. The catalytic cathode according to claim 1, **characterised in that** said first and second layers comprise an Li⁺ ion-conducting binder.

3. The catalytic cathode according to claim 2, **characterised in that** the mass concentration of binder in said first catalytic layer is greater than the mass concentration of binder in said second catalytic layer.

4. The catalytic cathode according to any one of claims 2 to 3, **characterised in that** the mass concentration of binder in said first layer is between approximately 20% and 40%.

5. The catalytic cathode according to any one of claims 2 to 4, **characterised in that** the mass concentration of binder in said second layer is between approximately 10% and 30%.

6. The catalytic cathode according to any one of claims 2 to 5, **characterised in that** said binder is a polymeric binder that can be polytetrafluoroethylene or polyvinylidene fluoride.

7. The catalytic cathode according to any one of claims 1 to 6, **characterised in that** the electronic conducting support particles are metallic carbide particles based on refractory metal that can be titanium or tantalum or tungsten.

8. The catalytic cathode according to any one of claims 1 to 7, **characterised in that** said two layers are supported by a current collector that can be made of titanium.

9. A lithium-air battery comprising a lithium-based anode, a lithium-ion conducting electrolyte and a catalytic air cathode, said catalytic cathode being a catalytic cathode according to any one of claims 1 to 8.

10. The lithium-air battery according to claim 9, **characterised in that** said lithium-ion conducting electrolyte comprises a solid electrolyte material on the basis of an organic polymer conducting the lithium-ions in contact with said catalytic cathode.

11. The lithium-air battery according to claim 10, **characterised in that** said organic polymer is a sulphonated organic polymer, for example a perfluorosulphonated polymer (PFSA) or a sulphonated polyetheretherketone (s-PEEK) or a sulphonated polyimide (s-PI) or a polyvinylidene fluorite (PVDF).

12. The lithium-air battery according to claim 11, **characterised in that** said organic polymer is a lithiated polymer.
